# EUROPEAN PATENT SPECIFICATION

(11) **EP 0 881 806 B1**
(45) Date of publication and mention of the grant of the patent: **23.02.2005**
(21) Application number: 98401254.2
(22) Date of filing: 27.05.1998
(51) Int. Cl.: H04L 27/00, H04L 27/18

(54) **Frame structure with a plurality of modulation formats**
Rahmenstruktur mit einer Mehrzahl von Modulationsarten
Structure de trâme avec plusieurs types de modulation

(30) Priority: 29.05.1997 ES 9701167
(43) Date of publication of application: 02.12.1998
(73) Proprietor: ALCATEL, 75008 Paris (FR)
(72) Inventor: Fernandez Duran, Alfonso, 28229 Villanueva del Pardillo, Madrid (ES); Nunez Leon de Santos, Gregorio, 45002 Toledo (ES)
(74) Representative: Lamoureux, Bernard

(56) References cited:
- EP-A- 0 397 077
- WO-A-94/00943
- US-A- 5 577 087
- US-A- 5 604 770
- SAMPEI S ET AL: "ADAPTIVE MODULATION/TDMA SCHEME FOR PERSONAL MULTI-MEDIA COMMUNICATION SYSTEMS" , PROCEEDINGS OF THE GLOBAL TELECOMMUNICATIONS CONFERENCE (GLOBECOM). SAN FRANCISCO, NOV. 28 - DEC. 2, 1994, NEW YORK, IEEE, US, VOL. VOL. 2, PAGE(S) 989-993 XP000488685 ISBN: 0-7803-1821-8 * the whole document *

## Description

### OBJECT OF THE INVENTION

The present invention refers to a multi-modulation frame and also to an emitter and a receiver in order to emit and receive the said multi-modulation frame according to claims 1, 3 and 5. The emitter and/or receptor, according to the invention, may be embodied, for example, in a mobile of a radio-communications system according to claims 7 and 8. A frame is defined as a signal which includes successive time intervals. A multi-modulation frame is characterised in that it includes at least two time intervals, each of which being defined by respective modulations which are different from each other.

### STATE OF THE ART

A frame of the type defined above, can be used, for example, in the D.E.C.T. standard (Digital Enhanced Cordless Telecommunications) of the E.T.S.I. (European Telecommunications Standards Institute) with the objective of increasing the traffic capacity in at least one channel, or temporary interval, without changing the modulation defined for other channels.

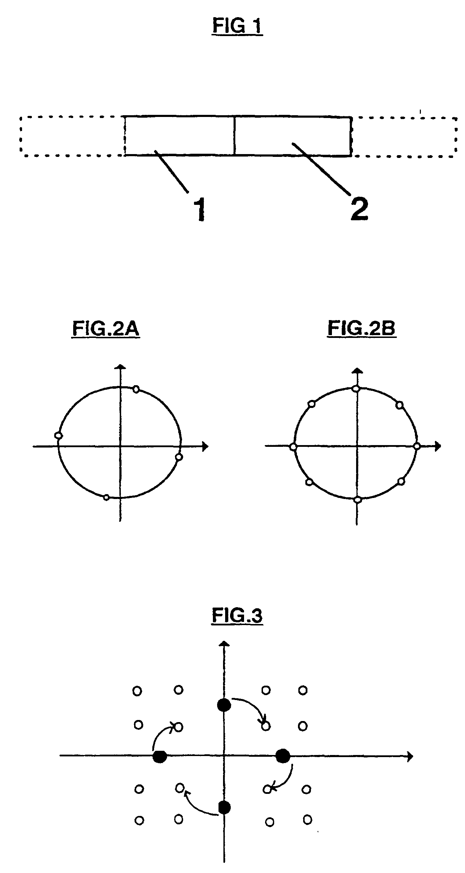

For example, and referring to the drawings in figures 1, 2A and 2B, a first time interval, 1, is defined by a GFSK (Frequency Shift Keying) modulation already used in the D.E.C.T. and another time interval 2 is defined by a π/4DQPSK (π/4-Differential Phase Shift Keying). The two modulations define respective constellations which appear in figure 2A and 2B in relation to predefined references.

In the D.E.C.T. standard the modulated signal is delimited by a spectral pattern within which the modulated signal must be circumscribed.

When use is made of two modulations in the same frame, for example, the modulations which appear in figures 2A and 2B, the resulting signal defines a spectrum which does not enter into the predefined DECT pattern.
EP-A-0 397 077 discloses a modulator capable of selecting a type of modulation between two different modulations based on the type of parallel data input converted from an input serial data. It should be observed that the amplitude is not maintained during the modulation change.
US-A-5 604 770 discloses a modulator comprising a filter that uses only the modulation π/4-DQPSK wherein two signals, i.e. odd and even are generated from the digital data will be transmitted such that I, Q components are generated in turn from these signals. A modulated transmitted signal is obtained at an output of a IQ modulator.
Note that a transmitted frame only includes data symbol modulates in accordance with π/4-DQPSK modulation technique.

### CHARACTERISATION OF THE INVENTION

A first object of the present invention is to define a multi-modulation frame, which defines a spectrum which is circumscribed in a limited amplitude spectral pattern.

A second object of the invention is to define an emitter of a multi-modulation frame, according to the invention.

A third object of the invention is to define a receiver of a multi-modulation frame, according to the invention.

Consequently, a multi-modulation frame, according to the present invention, including at least a. first time interval. and a second time interval which follows the said first time interval, the first and second time intervals being defined by first and second modulations respectively, are characterised in that a last symbol of the constellation of the first time interval with the first modulation coincides in phase and amplitude with a first symbol from the second modulation.

The result being that in all of the successive frames there is no "modulation skipping".

An emitter to produce the said frame includes first and second modulation means to modulate data according to the said first and second modulations respectively, and means for placing, in the initial phase values of the said second modulation means, through a first symbol of the second time interval, the phase of a last symbol produced by the said first modulation means in the said first time interval.

For example, in the case of GFSK and π/4DQPSK modulations, the means for placing in the initial values include:
- means for computing the phase of the last symbol of the GFSK modulation in the first time interval,
- means for selectively selecting, during the second time interval:
   the phase of the symbol previous to the π/4DQPSK modulation when the posterior symbol is not the first symbol of that π/4DQPSK modulation in the first time interval, and
   the phase of the computed symbol when the posterior symbol is the first symbol of said π/4DQPSK modulation,
   with the aim of computing a π/4DQPSK modulation symbol.

A receiver to receive the said frame consists of first and second demodulation means to demodulate modulated data, according to those first and second modulations respectively, and means for placing, in the initial phase values of the said second demodulation means, the phase of the last symbol received by the said first demodulation means in the first time interval.

### BRIEF DESCRIPTION OF THE DRAWINGS

A more detailed explanation of the present invention is given in the following description based on the attached drawings in which:
- figure 1 shows the format of a multi-modulation frame;
- figures 2A. and 2B show the .constellations relative to GFSK and π/4DQPSK modulations respectively;
- figure 3 shows two constellations and arrows pointing out the correspondence between the two constellations, according to the invention;
- figure 4 shows a block diagram of a multi-modulation frame emitter, according to the invention; and
- figure 5 shows a block diagram of a multi-modulation frame receiver, according to the invention.

### DESCRIPTION OF THE INVENTION

The emitter, according to the invention, cancels out the "modulation skipping", or discontinuities which appear, according to the state of the art, in each of the successive frames. With reference to figures 2A and 2B, the respective constellations of the two modulations which are assigned in a single frame must, according to the invention, satisfy the following criteria: the respective phases and modules of all the symbols of one of the two constellations must correspond to respective phases and modules of the other constellation. Thus, for example, with reference to figures 2A and 2B, all the symbols of the GFSK modulation (figure 2A) correspond to some of the symbols of the constellation π/4DQPSK (figure 2B) as a result of a "rotation" of the GFSK constellation.

In more general terms, an adaptation of a constellation to another constellation needs to adapt the modules and phases of all the symbols of one of the two constellations to some of the modules and phases of the other constellation. The arrows in figure 3 more clearly show, according to the invention, the correspondence in phase and module of two constellations.

The following description refers to two GFSK and π/4DQPSK modulations which have equal modules although the invention can be applied to all other modulations, such as for example, nPSK (PSK, 4PSK, 8PSK, ...), nFSK, nGMSK, etc. In the case where a placing in correspondence in module of the two modulations were necessary, use can be made of a measuring circuit for the modules of at least some of the symbols of one of the two modulations, and a gain control circuit which regulates the amplitude modules of the other modulation in order to regulate the modules of one of the constellations in relation to the module of the other modulation. The module measuring circuit and the gain control circuit are placed in the two demodulation chains respectively.

On the other hand, the invention is described for a particular case, according to which only two modulations are assigned within the same frame, although they can be assigned in other environments in which more than two modulations exist within one single frame.

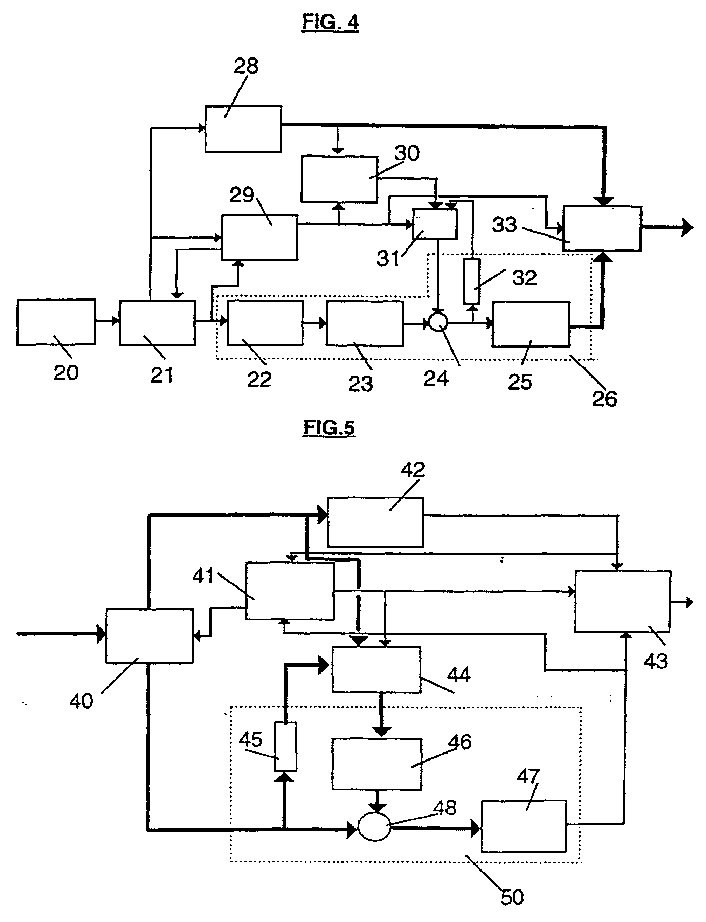

The emitter of the invention, shown in figure 4, includes a demultiplexor (21), a first GFSK modulator (28), a second π/4DQPSK modulator (26), a control unit (29), a phase computer (30) and two multiplexors (31 and 33). In a conventional way the π/4DQPSK modulator (26) includes a symbol association unit (22), a correspondence table (23), an adder (24) a delay line (32) and an IQ quadrature signals generator (25). The control unit (29) assures the sequencing of the operation of the different circuits shown in figure 3.

Binary data are produced by a data source (20) to form a data stream. According to the format of the chosen frame, the GFSK modulation will be assigned to one part of the frame and the π/4DQPSK modulation will be assigned to the other part. A control unit (29) output is assigned to the π/4DQPSK modulation. A control unit (29) output is assigned to an input to the demultiplexor (21), the two outputs of which selectively and alternately receive the binary data produced by the source (20), for the data to be selectively modulated with GFSK (28) modulation or π/4DQPSK (26) modulation, depends on the position of the said data modulations within the frame. When the GFSK modulation is assigned to the data, the control unit (29) assigns a control signal to the multiplexor (33), which is reproduced at the signal output of the GFSK (28) modulator, in the form of IQ signals.

The π/4DQPSK modulator operates in the following way. The symbol association unit (22) associates a dephasing, with each two bits of the binary data, which is memorised in the table (23), and which defines a phase variation in relation to a previous phase. The previous phase and the dephasing are added, using the delay line (32) and the adder (24) to produce a current phase signal which is assigned to the IQ signals generator (25). The generator (25) produces signals in IQ quadrature. Thus when the π/4DQPSK modulation is assigned to the data, the control unit (29) assigns a control signal to the multiplexor (33), which reproduces at its output the π/4DQPSK (26) modulator output signal in the form of IQ signals.

According to the invention the emitter in figure 4 includes means for placing in the initial phase values of the π/4DQPSK modulator, for a first symbol of the second time interval (2) with π/4DQPSK (26) modulation, the phase of a last symbol produced by the GFSK modulator in the first time interval (1). These means for placing the initial values include the phase computer (30) which computes the phase of the last symbol of the GFSK modulation, just before the first symbol with π/4DQPSK modulation. The phase of the last symbol of the GFSK modulation which is computed by the circuit (30) is assigned to an adder (24) input through the multiplexor (31), in correspondence with the first symbol of the time interval with π/4DQPSK modulation. For this reason the control unit (29) assigns a control signal to the multiplexor (31) in order to validate the phase computer (30) output in correspondence with this first symbol of the π/4DQPSK modulation. Thus, during the time interval with π/4DQPSK modulation, the phase of the previous symbol of the π/4DQPSK modulation is selectively selected when the posterior symbol is not the first symbol of the time interval with /4DQPSK modulation, and the phase of the symbol computed by the computer (30) when the posterior symbol is the first symbol of the time interval with π/4DQPSK modulation.

The result is that the frame obtained with the emitter of the invention includes a first time interval and a second time interval which follows the first time interval, the first and second time intervals being defined by the first GFSK modulation and the second π/4DQPSK modulation respectively. Also, the phase of a last constellation symbol from the first interval with GFSK modulation coincides with a phase of a constellation symbol of the π/4DQPSK modulation.

It should be noted that the GFSK modulator (28) and the π/4DQPSK modulator (26) include respective filters, Gaussian for example, and a raised cosine root, with different temporal delays between them. In order to avoid this delay difference, a single filter can be used at the emitter output in figure 4, without integrating filters in the modulators (28 and 25). On the other hand, if filters are used on the modulators (28 and 25), a fixed delay is assigned to the signal received when it is directed to the symbol association unit (22).

The receiver, according- to the invention, is shown in figure 5. It includes a demultiplexor (40), a control unit (41), a GFSK demodulator (42), two multiplexors (43 and 44) and a π/4DQPSK demodulator (50). The demodulator (50) includes a delay line (45) a π phase shifter (46), a multiplier (48) and a detector (47). The control unit (41) assigns a control signal to the demultiplexor (40) in such a way that the frame, according to the invention, which is received is selectively and alternatively assigned to the modulators (42 and 50). The control unit (41) assigns this control signal to the demultiplexor on the basis of the format of the frame in such a way that the first time interval with GFSK modulation is assigned to the demodulator (42), and that the second time interval, with π/4DQPSK modulation is assigned to the demodulator (50). For this reason the control unit (41) is synchronised using bits produced at the demodulator (42) output.

Noting e^{jϕ}n, the nth symbol of the π/4DQPSK modulation, it follows that, through the link including the delay line (45), the phase shifter (46) and the multiplier (48), the output of the multiplier (48) produces a signal e^{Δjϕ}n representative of the phase shift between the previous range symbol (n-1) and the current range symbol (n). The detector (47) produces a sequence of bits on the basis of the phase shifting signal e^{Δjϕ}n. According to the invention, for a first symbol of the second time interval, the control unit (41) selects the signal assigned to the GFSK demodulator input, for placing the initial values of the demodulator (50) phase, in the phase of a last symbol received in the first time interval. For this reason, the control unit (41) selects, through the multiplexor (44), the signal assigned to the demodulator (42) in order to assign it to the phase shifter (46) when the last symbol of the first time interval is assigned to the said demodulator (42). After the first symbol of the second time interval, that is for all the other symbols of the second time interval, the delay line (45) output is assigned to the phase shifter (46) input. Thus the initialisation phase of the demodulator (50) corresponds to the phase of the last symbol received by the demodulator (42).

In the case where the placing in module correspondence of the two modulations is necessary, a gain control circuit can be used with a predefined gain value which is a function of the known modules of the two modulations and which regulates the modules of one of the two constellations, in order that that constellation coincides with the other modulation. This gain control circuit is placed in the corresponding demodulation chain.

## Claims

1. **Multi-modulation frame** including at least a first time interval (1) and a second time interval (2) which follows the said first time interval (1), the first and second time intervals (1,2) being defined by first and second modulations respectively; **characterised in that** a last symbol of the first time interval constellation with the first modulation coincides in phase and amplitude with the first symbol from the second modulation.

2. **Multi-modulation frame** according to claim 1, **characterised in that** the said first modulation is a GFSK modulation, and the second modulation is a π/4DQPSK modulation.

3. **Emitter** for producing a multi-modulation frame according to claim 1, **characterised in that** it includes first and second modulation means (26, 28) for modulating data according to the first and second modulations respectively, and means (29,30,31) for placing in the initial phase values of the second modulation means (26), for a first symbol of the second time interval, the phase of a last symbol produced by the first modulation means (28) in the said first time interval (1).

4. **Emitter** according to claim 3, **characterised in that** the said means for placing in the initial values include:
- means (30) for computing the phase of the last symbol of the GFSK modulation, in the first time interval (1),
- means (29,30) for selectively selecting, during the second time interval:
the phase of the previous symbol of the π/4DQPSK modulation when the posterior symbol is not the first symbol of the said π/4DQPSK modulation in the first time interval (1), and
the phase of the computed symbol, when the posterior symbol is the first symbol of the said π/4DQPSK modulation,
with the aim of computing a π/4DQPSK modulation symbol.

5. **Receiver** for receiving a multi-modulation frame according to claim 1, **characterised in that** it includes first and second demodulation means (42, 50) for the demodulation of modulated data, according to the first and second modulations respectively, and means (41,44) for placing in the initial phase values of the second demodulation means (50), for a first symbol of the second time interval (2), the phase of a last symbol received by the first demodulation means (28) in the first time interval (1).

6. **Receiver** according to claim 5, **characterised in that** it includes gain control means.

7. **Radio-communications system** including mobiles comprising an emitter according to claim 3.

8. **Radio-communications system** including mobiles comprising a receiver according to claim 5.

## Patentansprüche

1. Multimodulationsrahmen, der mindestens ein erstes Zeitintervall (1) und ein zweites Zeitintervall (2) enthält, das auf das erste Zeitintervall (1) folgt, wobei das erste und das zweite Zeitintervall (1, 2) durch erste, bzw. zweite Modulationen definiert sind, **dadurch gekennzeichnet, dass** ein letztes Symbol der ersten Zeitintervall-Konstellation mit der ersten Modulation in Phase und Amplitude mit dem ersten Symbol der zweiten Modulation übereinstimmt.

2. Multimodulationsrahmen gemäß Anspruch 1, **dadurch gekennzeichnet, dass** die erste Modulation eine GFSK-Modulation ist und die zweite Modulation eine π/4DQPSK-Modulation ist.

3. Sender zur Erzeugung eines Multimodulationsrahmens gemäß Anspruch 1, **dadurch gekennzeichnet, dass** er erste und zweite Modulationsmittel (26, 28) zur Modulation von Daten gemäß der ersten, bzw. der zweiten Modulation enthält, und Mittel (29, 30, 31), um in den Anfangs-Phasenwerten der zweiten Modulationsmittel (26) für ein erstes Symbol des zweiten Zeitintervalls die Phase eines letzten Symbols zu platzieren, das von den ersten Modulationsmitteln (28) im ersten Zeitintervall (1) erzeugt wird.

4. Sender gemäß Anspruch 3, **dadurch gekennzeichnet, dass** die Mittel zur Platzierung der Anfangswerte folgendes enthalten:
- Mittel (30) zur Berechnung der Phase des letzten Symbols der GFSK-Modulation im ersten Zeitintervall (1),
- Mittel (29, 30), um im zweiten Zeitintervall folgendes selektiv auszuwählen:
Die Phase des vorherigen Symbols der π/4DQPSK-Modulation, wenn das nachfolgende Symbol nicht das erste Symbol der π/4DQPSK-Modulation im ersten Zeitintervall (1) ist, und
die Phase des berechneten Symbols, wenn das nachfolgende Symbol das erste Symbol der π/4DQPSK-Modulation ist,
mit dem Ziel der Berechnung eines π/4DQPSK-Modulations-Symbols.

5. Empfänger zum Empfang eines Multimodulationsrahmens gemäß Anspruch 1, **dadurch gekennzeichnet, dass** er erste und zweite Demodulationsmittel (42, 50) zur Demodulation modulierter Daten gemäß der ersten, bzw. der zweiten Modulation enthält, und Mittel (41, 44), um in den Anfangs-Phasenwerten der zweiten Demodulationsmittel (50) für ein erstes Symbol des zweiten Zeitintervalls (2) die Phase eines letzten Symbols zu platzieren, das von den ersten Demodulationsmitteln (28) im ersten Zeitintervall (1) empfangen wurde.

6. Empfänger gemäß Anspruch 5, **dadurch gekennzeichnet, dass** er Mittel zur Verstärkungssteuerung enthält.

7. Funkkommunikationssystem, das Mobiltelefone enthält, die einen Sender gemäß Anspruch 3 enthalten.

8. Funkkommunikationssystem, das Mobiltelefone enthält, die einen Empfänger gemäß Anspruch 5 enthalten.

## Revendications

1. **Trame à modulations multiples,** comportant au moins un premier intervalle de temps (1) et un deuxième intervalle de temps (2) qui suit ledit premier intervalle de temps (1), lesdits premier et deuxième intervalles de temps (1, 2) étant définis par des première et deuxième modulations, respectivement ; **caractérisée en ce qu'**un dernier symbole de la constellation du premier intervalle de temps présentant la première modulation coïncide en phase et en amplitude avec le premier symbole issu de la deuxième modulation.

2. **Trame à modulations multiples** selon la revendication 1, **caractérisée en ce que** la première modulation est une modulation GFSK et la deuxième modulation est une modulation π/4DQPSK.

3. **Emetteur** servant à produire une trame à modulations multiples selon la revendication 1, **caractérisé** en qu'il comporte des premier et deuxième moyens de modulation (26, 28) pour moduler des données selon les première et deuxième modulations, respectivement, et un moyen (29, 30, 31) d'insertion, dans les valeurs de phase initiales du deuxième moyen de modulation (26), pour un premier symbole du deuxième intervalle de temps, de la phase d'un dernier symbole produit par le premier moyen de modulation (28) dans ledit premier intervalle de temps (1).

4. **Emetteur** selon la revendication 3, **caractérisé en ce que** ledit moyen d'insertion dans les valeurs initiales comporte :
- un moyen (30) de calcul de la phase du dernier symbole de la modulation GFSK dans le premier intervalle de temps (1),
- un moyen (29, 30) de sélection sélective, durant le deuxième intervalle de temps :
de la phase du symbole antérieur de la modulation π/4DQPSK lorsque le symbole postérieur n'est pas le premier symbole de ladite modulation π/4DQPSK dans le premier intervalle de temps (1), et
de la phase du symbole calculé lorsque le symbole postérieur est le premier symbole de ladite modulation π/4DQPSK,
dans le but de calculer un symbole de modulation π/4DQPSK.

5. **Récepteur** servant à recevoir une trame à modulations multiples selon la revendication 1, **caractérisé** en qu'il comporte des premier et deuxième moyens de démodulation (42, 50) pour démoduler des données modulées, selon ces première et deuxième modulations, respectivement, et un moyen (41, 44) d'insertion, dans les valeurs de phase initiales du deuxième moyen de démodulation (50), pour un premier symbole du deuxième intervalle de temps (2), de la phase d'un dernier symbole reçu par le premier moyen de démodulation (28) dans le premier intervalle de temps (1).

6. **Récepteur** selon la revendication 5, **caractérisé en ce qu'**il comporte un moyen de commande de gain.

7. **Système de radiocommunications,** comportant des unités mobiles comprenant un émetteur selon la revendication 3.

8. **Système de radiocommunications,** comportant des unités mobiles comprenant un récepteur selon la revendication 5.
